# EUROPEAN PATENT APPLICATION

(11) **EP 3 859 843 A1**
(43) Date of publication of application: **04.08.2021**
(21) Application number: 18934662.0
(22) Date of filing: 27.09.2018
(51) Int. Cl.: H01M 4/58, H01M 4/36, H01M 4/62, H01M 10/052, H01M 10/0566

(54) **ELECTRICALLY CONDUCTIVE SUBSTANCE, POSITIVE ELECTRODE, AND SECONDARY BATTERY**

(71) Applicant: Murata Manufacturing Co., Ltd., Nagaokakyo-shi, Kyoto 617-8555 (JP); Hydro-Québec, Montréal QC H2Z 1A4 (CA)
(72) Inventor: ASSRESAHEGN DESALEGN, Birhanu, Quebec, J3X 1S1 (CA); GENDRON, Frederic, Quebec, J3X 1S1 (CA); ZAGHIB, Karim, Quebec, J3X 1S1 (CA); ASAKAWA, Yuichiro, Nagaokakyo-shi, Kyoto 617-8555 (JP); TSUIKI, Hirofumi, Nagaokakyo-shi, Kyoto 617-8555 (JP); UENO, Hiroshi, Nagaokakyo-shi, Kyoto 617-8555 (JP)
(74) Representative: Witte, Weller & Partner Patentanwälte mbB
(86) International application number: PCT/JP2018/035974
(87) International publication number: WO 2020/065832

(57) **Abstract**

A secondary battery includes a positive electrode, a negative electrode, and an electrolytic solution. The positive electrode includes a positive electrode current collector and a positive electrode active material layer. The positive electrode active material layer is provided on the positive electrode current collector and includes an electrically conductive substance. The electrically conductive substance includes electrically conductive supports and electrically conductive particles. The electrically conductive supports each include a carbon material. The electrically conductive particles are supported by the electrically conductive supports. The electrically conductive particles are primary particles that each include a lithium phosphate compound and have an average particle size of less than 35 nanometers.

## Description

### Technical Field

The technology relates to: an electrically conductive substance; a positive electrode including the electrically conductive substance; and a secondary battery including the electrically conductive substance.

### Background Art

Various electronic apparatuses such as mobile phones have been widely used. Accordingly, a secondary battery, which is smaller in size and lighter in weight and allows for a higher energy density, is under development as a power source.

Such a secondary battery includes a positive electrode, a negative electrode, and an electrolytic solution. A configuration of the secondary battery greatly influences battery characteristics. Accordingly, various considerations have been given to the configuration of the secondary battery. Specifically, to improve a battery characteristic, a lithium metal phosphate compound (LMP) is used as a positive electrode active material (for example, see PTL 1).

### Citation List

### Patent Literature

PTL 1: US Patent Application Publication No. 2016-0133938

### Summary of the Invention

Electronic apparatuses, on which a secondary battery is to be mounted, are increasingly gaining higher performance and more functions, causing more frequent use of the electronic apparatuses and expanding a use environment of the electronic apparatuses. Accordingly, there is still room for improvement in terms of battery characteristics of the secondary battery.

The technology has been made in view of such an issue and it is an object of the technology to provide an electrically conductive substance, a positive electrode, and a secondary battery that each make it possible to achieve a superior battery characteristic.

An electrically conductive substance according to an embodiment of the technology includes electrically conductive supports and electrically conductive particles. The electrically conductive supports each include a carbon material. The electrically conductive particles are supported by the electrically conductive supports. The electrically conductive particles are primary particles that each include a lithium phosphate compound represented by Formula (1) below and have an average particle size of less than 35 nanometers.

LiₓMn_{y}Fe_{z}M1_{1-Y-Z}PO₄ ...... (1)

(Where:
M1 is at least one of magnesium (Mg), cobalt (Co), calcium (Ca), nickel (Ni), aluminum (Al), molybdenum (Mo), zirconium (Zr), zinc (Zn), chromium (Cr), tin (Sn), strontium (Sr), titanium (Ti), copper (Cu), boron (B), vanadium (V), or tungsten (W); and
x, y, and z satisfy 0 < x ≤ 1.2, 0 ≤ y ≤ 1, 0 ≤ z ≤ 1, and 0 < (y + z).)

A positive electrode according to an embodiment of the technology includes a positive electrode current collector and a positive electrode active material layer. The positive electrode active material layer is provided on the positive electrode current collector and includes an electrically conductive substance. The electrically conductive substance has a configuration similar to that of the electrically conductive substance according to the embodiment of the technology described above.

A secondary battery according to an embodiment of the technology includes a positive electrode, a negative electrode, and an electrolytic solution. The positive electrode has a configuration similar to that of the positive electrode according to the embodiment of the technology described above.

According to the electrically conductive substance, the positive electrode, or the secondary battery of the technology, the electrically conductive substance includes the electrically conductive particles that are the primary particles supported by the electrically conductive supports. The electrically conductive supports each include the carbon material. The electrically conductive particles each include the lithium phosphate compound described above and have the average particle size described above. This makes it possible to achieve a superior battery characteristic.

Note that effects of the technology are not necessarily limited to that described above and may include any of a series of effects described below in relation to the technology.

### Brief Description of Drawings

[FIG. 1] FIG. 1 is a schematic plan view of a configuration of an electrically conductive substance according to one embodiment of the technology.
[FIG. 2] FIG. 2 is a plan view of a modification related to the configuration of the electrically conductive substance.
[FIG. 3] FIG. 3 is a sectional view of a configuration of a secondary battery (cylindrical type) according to one embodiment of the technology.
[FIG. 4] FIG. 4 is an enlarged sectional view of a configuration of a main part of the secondary battery illustrated in FIG. 3.
[FIG. 5] FIG. 5 is a perspective view of a configuration of another secondary battery (laminated-film type) according to one embodiment of the technology.
[FIG. 6] FIG. 6 is an enlarged sectional view of a configuration of a main part of the secondary battery illustrated in FIG. 5.
[FIG. 7] FIG. 7 is a diagram illustrating a result of measurement of electrical conductivity.

### Modes for Carrying Out the Invention

Some embodiments of the technology are described below in detail with reference to the drawings. The description is given in the following order.
1. Electrically Conductive Substance
   1-1. Configuration
   1-2. Manufacturing Method
   1-3. Action and Effects
   1-4. Modifications
2. Secondary Battery (Positive Electrode)
   2-1. Cylindrical Type
      2-1-1. Configuration
      2-1-2. Operation
      2-1-3. Manufacturing Method
      2-1-4. Action and Effects
   2-2. Laminated-film Type
      2-2-1. Configuration
      2-2-2. Operation
      2-2-3. Manufacturing Method
      2-2-4. Action and Effects
   2-3. Modifications
3. Applications of Secondary Battery

### <1. Electrically Conductive Substance>

A description is given first of an electrically conductive substance according to an embodiment of the technology.

An electrically conductive substance described below includes a part (electrically conductive particles 2 which will be described later) into which lithium is to be inserted and from which lithium is to be extracted. The electrically conductive substance is used in an electrochemical unit such as a secondary battery. Specifically, the electrically conductive substance is used, for example, as an active material in a case where the characteristic thereof related to insertion and extraction of lithium is utilized. Alternatively, the electrically conductive substance is used, for example, as a conductor in a case where an electrically conductive characteristic thereof is utilized.

### <1-1. Configuration>

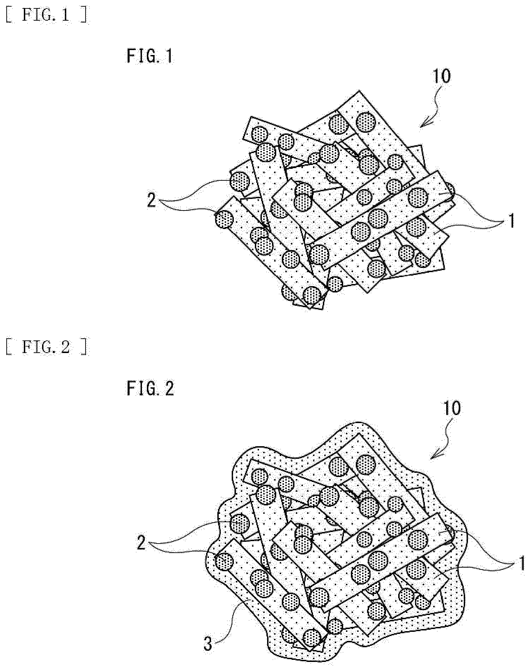

FIG. 1 schematically illustrates a plan configuration of an electrically conductive substance 10, as an example of the electrically conductive substance. Referring to FIG. 1, the electrically conductive substance 10 includes: electrically conductive supports 1; and electrically conductive particles 2 supported by the electrically conductive supports 1. In FIG. 1, the electrically conductive supports 1 are lightly hatched and the electrically conductive particles 2 are densely hatched.

### [Electrically Conductive Supports]

The electrically conductive supports 1 support the electrically conductive particles 2 and each include a carbon material. The electrically conductive supports 1 are therefore electrically conductive.

In the electrically conductive substance 10, the electrically conductive supports 1 support the electrically conductive particles 2 which are primary particles. In this case, for example, the electrically conductive supports 1 gather closely together while supporting the electrically conductive particles 2, thereby forming a secondary particle as illustrated in FIG. 1.

An average particle size of such secondary particles is not particularly limited, and is, for example, within a range from 50 nm to 1000 nm both inclusive. A reason for this is that the extremely small average particle size of the secondary particles results in a decrease in electrical resistance of the electrically conductive substance 10. A procedure of determining the average particle size of the secondary particles is, for example, similar to a procedure of determining an average particle size of the electrically conductive particles 2 which will be described later.

The term "carbon material" is a generic term for a material that includes carbon (C) as a constituent element. The carbon material is not limited to a particular kind. The carbon material includes, for example, one or more of a sheet-shaped carbon material, a fibrous carbon material, and a spherical carbon material. Herein, the sheet-shaped carbon material has an appearance (a shape) of a thin plate. The fibrous carbon material has a thin and long appearance (shape). The spherical carbon material has an approximately spherical appearance (shape). A reason for this is that this makes it easier for the electrically conductive supports 1 to support the electrically conductive particles 2, therefore increasing the number of the electrically conductive particles 2 which the electrically conductive supports 1 each support.

Specifically, the sheet-shaped carbon material includes, for example, one or more of materials including, without limitation, graphene and reduced graphene oxide. The number of layers of graphene is not particularly limited. Therefore, only one layer of graphene may be provided, or two or more layers of graphene may be provided. In particular, it is preferable that the sheet-shaped carbon material include, for example, electrochemically exfoliated graphene. A reason for this is that it is easy to obtain extremely thin single-layer or bi-layer graphene thereby.

The fibrous carbon material includes, for example, one or more of materials including, without limitation, a carbon nanotube, a carbon nanofiber, and a carbon nanobud. In a case where the fibrous carbon material includes a carbon nanotube having a hollow structure, the fibrous carbon material includes an outer wall and an inner wall of the hollow structure. In this case, the electrically conductive particles 2 may be supported only by the outer wall. The electrically conductive particles 2 may be supported only by the inner wall, or may be supported by both of the outer wall and the inner wall.

The spherical carbon material includes, for example, one or more of materials including, without limitation, a carbon onion, carbon nanofoam, carbide-derived carbon, and acetylene black.

### [Electrically Conductive Particles]

The electrically conductive particles 2 correspond to the part, of the electrically conductive substance 10, into which lithium is to be inserted and from which lithium is to be extracted as described above, and are therefore able to serve as so-called active materials.

The number of the electrically conductive particles 2 supported by each of the electrically conductive supports 1 is not particularly limited, and may be therefore only one or may be two or more. FIG. 1 illustrates an example case where two or more of the electrically conductive particles 2 are supported by each of the electrically conductive supports 1.

The electrically conductive particles 2 each include one or more of lithium phosphate compounds represented by Formula (1) below. The lithium phosphate compound is a phosphate compound that includes: lithium (Li); and one or both of manganese (Mn) and iron (Fe), as constituent elements, and has an olivine crystal structure. Note that, as can be appreciated from Formula (1), the lithium phosphate compound may further include one or more of additional metal elements (M1) as a constituent element or constituent elements.

LiₓMn_{y}Fe_{z}M1_{1-y-z}PO₄ ...... (1)

(Where:
M1 is at least one of magnesium (Mg), cobalt (Co), calcium (Ca), nickel (Ni), aluminum (Al), molybdenum (Mo), zirconium (Zr), zinc (Zn), chromium (Cr), tin (Sn), strontium (Sr), titanium (Ti), copper (Cu), boron (B), vanadium (V), or tungsten (W); and
x, y, and z satisfy 0 < x ≤ 1.2, 0 ≤ y ≤ 1, 0 ≤ z ≤ 1, and 0 < (y + z).)

Specifically, examples of the lithium phosphate compound not including any additional metal element (M1) as a constituent element include LiMn_{0.5}Fe_{0.5}PO₄, LiMn_{0.7}Fe_{0.3}PO₄, LiMn_{0.75}Fe_{0.25}PO₄, and LiMn_{0.80}Fe_{0.20}PO₄. Examples of the lithium phosphate compound including one or more additional metal elements (M1) as a constituent element or constituent elements include LiMn_{0.75}Fe_{0.20}Mg_{0.05}PO₄, LiMn_{0.80}Fe_{0.15}Mg_{0.05}PO₄, LiMn_{0.85}Fe_{0.10}Mg_{0.05}PO₄, LiMn_{0.75}Fe_{0.20}Mg_{0.045}Mg_{0.005}PO₄, and LiMn₀.₇₅Fe_{0.20}Co_{0.05}PO₄.

Here, the electrically conductive particles 2 have an extremely small average particle size. Specifically, the average particle size of the electrically conductive particles 2 is on the so-called nano-order. More specifically, the average particle size of the electrically conductive particles 2 is less than 35 nm.

A reason why the electrically conductive particles 2 have the extremely small average particle size is because the electrically conductive particles 2 are formed by a hydrothermal synthesis method in a process of forming the electrically conductive substance 10, as will be described later. That is, it is because a special crystal growth process of the lithium phosphate compound is used to form the electrically conductive particles 2. Such a special crystal growth process of the lithium phosphate compound starts from the electrically conductive supports 1 under a high-temperature and high-pressure condition. The hydrothermal synthesis method is a crystal growth method that is performed in presence of hot water under the high-temperature and high-pressure condition, and allows for a crystal growth process which is difficult to achieve under an ambient-temperature and ambient-pressure condition. In a case of using the hydrothermal synthesis method, a crystal of the lithium phosphate compound grows on a surface of each of the electrically conductive supports 1 in presence of hot water under the high-temperature and high-pressure condition, resulting in formation of particles (the electrically conductive particles 2) having an extremely small average particle size which is difficult to achieve by a usual crystal growth process. The hydrothermal synthesis method used to form the electrically conductive particles 2 will be described later in detail.

Thus, the electrically conductive particles 2, i.e., the crystals of the lithium phosphate compound, grow while reacting with any functional group (reactive group) present on the surface of corresponding one of the electrically conductive supports 1 in the crystal growth process using the hydrothermal synthesis method. It seems to be therefore reasonable that the electrically conductive particles 2 are coupled firmly to the corresponding one of the electrically conductive supports 1. Examples of the functional group include a hydroxyl group (-OH), a carboxyl group (-COOH), and an ether group (=O). Note that, in order to examine the kind of the functional group used in the crystal growth of the lithium phosphate compound, for example, the surface of the electrically conductive support 1 may be analyzed by an analysis method such as X-ray photoelectron spectroscopy (XPS).

To put it the other way around, in a case of not using the hydrothermal synthesis method but using a typical granulation method, the electrically conductive particles 2 may be formed but the average particle size of the electrically conductive particles 2 becomes 35 nm or greater, or more specifically, far greater than 35 nm. Thus, the average particle size of the electrically conductive particles 2 does not become less than 35 nm in the case of using a typical granulation method. In the case of using a typical granulation method, there is clearly no need to use the electrically conductive supports 1 to form the electrically conductive particles 2. Therefore, it is not only that the average particle size of the electrically conductive particles 2 does not become less than 35 nm, but also that the formed electrically conductive particles 2 are not supported by the electrically conductive supports 1.

Reasons why the electrically conductive substance 10 includes the electrically conductive particles 2 supported by the electrically conductive supports 1 are: that the electrically conductive property is secured by the electrically conductive supports 1; and that the extremely small average particle size results in a decrease in electrical resistance of the electrically conductive particles 2. Accordingly, compared with the usual lithium phosphate compound having the composition represented by Formula (1), i.e., the lithium phosphate compound particles that are not supported by the electrically conductive supports 1 and have a great average particle size of 35 nm or greater, the electrically conductive substance 10 has a markedly decreased electrical resistance and therefore has markedly improved electrical conductivity.

In particular, it is preferable that the average particle size of the electrically conductive particles 2 be within a range from 1 nm to 25 nm both inclusive. A reason for this is that the electrical resistance of the electrically conductive particles 2 is decreased sufficiently, which sufficiently improves the electrical conductivity of the electrically conductive substance 10.

The average particle size of the electrically conductive particles 2 is examined, for example, by the following procedure. First, the entire electrically conductive substance 10 is observed as illustrated in FIG. 1 with use of one or more of microscopes including, without limitation, a scanning electron microscope (SEM), a transmission electron microscope (TEM), and a scanning transmission electron microscope (STEM). A magnification for the observation is not particularly limited, for example, as long as the magnification allows for the observation of the entire electrically conductive substance 10. Thereafter, particle sizes (nm) of any forty of the electrically conductive particles 2 are measured on the basis of a result (a micrograph) of the observation of the electrically conductive substance 10. In this case, the forty electrically conductive particles 2 for the measurement of the particle sizes are selected in such a manner that locations thereof are dispersed as much as possible. Lastly, an average value of the particle sizes of the forty electrically conductive particles 2 is calculated as the average particle size.

### <1-2. Manufacturing Method>

The electrically conductive substance 10 is manufactured, for example, by the following procedure.

First, the electrically conductive supports 1 are prepared. Specifically, in a case of using the sheet-shaped carbon material as the electrically conductive supports 1, for example, a single-layer or bi-layer graphene nanosheet exfoliated from a thin piece of natural graphite by an electrochemical exfoliation method is used. In a case of using the fibrous carbon material (carbon nanotubes) as the electrically conductive supports 1, for example, an N-methyl-2-pyrrolidone suspension in which multi-layer carbon nanotubes are dispersed is used. In this case, for example, a graphene derivative with a wall (a hollow structure) including a carbon sheet (graphene) having a thickness of a single atom may be used.

Thereafter, a lithium source, one or both of a manganese source and an iron source, and a phosphate ion source are prepared. The lithium source is not particularly limited, and examples thereof include a lithium-containing compound such as a hydroxide. The manganese source is not particularly limited, and examples thereof include a manganese-containing compound such as a sulfate, a nitrate, or an acetate. The iron source is not particularly limited, and examples thereof include an iron-containing compound such as a sulfate, a nitrate, or an acetate. The phosphate ion source is not particularly limited, and examples thereof include a phosphate compound such as phosphoric acid. Note that one source does not necessarily supply only one metal element but may supply two or more metal elements.

Needless to say, in a case of forming the electrically conductive particles 2 including the additional metal element (M1) indicated in Formula (1) as a constituent element, a source of the additional metal element is also mixed together. Specifically, for example, in a case where the additional metal element is magnesium, the source of the additional metal element is a magnesium-containing compound such as a sulfate, a nitrate, or an acetate.

Lastly, the electrically conductive particles 2 are formed in water under a high-temperature and high-pressure condition by a hydrothermal synthesis method.

In this case, the electrically conductive supports 1 are dispersed in a solvent to thereby prepare a first suspension. Thereafter, a lithium-containing compound and a phosphate compound are added to the first suspension to thereby prepare a first mixture solution. The solvent is not limited to a particular kind, and examples thereof include an aqueous solvent such as pure water. Thereafter, the first mixture solution is heated.

As a result, a crystal of lithium phosphate (Li₃PO₄) starts growing from and on the surface of each of the electrically conductive supports 1. One or more lithium phosphate particles are thereby formed on the surface of each of the electrically conductive supports 1. Therefore, lithium phosphate particles are supported by the electrically conductive supports 1. In such a crystal growth process, a defect site present on the surface of each of the electrically conductive supports 1 is used as an anchor site. The lithium phosphate particles are therefore coupled firmly to the corresponding electrically conductive support 1. Note that conditions of heating the first mixture solution, i.e., conditions related to a temperature, pressure, etc. are not particularly limited and may be freely set.

Thereafter, the electrically conductive supports 1 supporting the lithium phosphate particles are dispersed in a solvent to thereby prepare a second suspension. Thereafter, a manganese-containing compound, an iron-containing compound, or both are added to the second suspension to thereby prepare a second mixture solution. The kind of the solvent is, for example, similar to the kind of the solvent used to prepare the first suspension. Needless to say, in a case of preparing the second mixture solution, a source of an additional metal element may be added to the first suspension on an as-needed basis. In this case, one or more of additives including, without limitation, an antioxidant may be further added to the first suspension. The antioxidant is not limited to a particular kind, and examples thereof include ascorbic acid that prevents oxidation of iron. Thereafter, the second mixture solution is heated.

Accordingly, transmetalation proceeds, causing part of lithium of the constituent elements of the lithium phosphate particles to be substituted by a material such as manganese. As a result, the electrically conductive particles 2 each including a lithium phosphate compound are formed. Note that conditions of heating the second mixture solution, i.e., conditions related to a temperature, pressure, etc. are not particularly limited and may be freely set.

The electrically conductive supports 1 thus gather closely together while supporting the electrically conductive particles 2 to thereby form secondary particles. As a result, the electrically conductive substance 10 illustrated in FIG. 1 is obtained.

### < 1-3. Action and Effects >

According to the electrically conductive substance 10, the electrically conductive particles 2 that are primary particles supported by the electrically conductive supports 1 are included. The electrically conductive supports 1 each include the carbon material. The electrically conductive particles 2 each include the lithium phosphate compound represented by Formula (1). The electrically conductive particles 2 have an average particle size of less than 35 nm. In this case, compared with the lithium phosphate compound particles that are not supported by the electrically conductive supports 1 and have a great average particle size of 35 nm or greater, the electrical resistance is markedly decreased, and the electrical conductivity is therefore markedly improved, as described above. Accordingly, with the secondary battery using the electrically conductive substance 10 as the active material or the conductor, it is possible to obtain superior battery characteristics.

In particular, the electrically conductive supports 1 may form secondary particles while supporting the electrically conductive particles 2, and the secondary particles may have an average particle size that is greater than or equal to 50 nm and less than or equal to 1000 nm. This makes it easier for the electrically conductive substance 10 to function as the active material or the conductor sufficiently, making it possible to achieve higher effects.

Further, the carbon material included in the electrically conductive supports 1 may include one or more of the sheet-shaped carbon material, the fibrous carbon material, and the spherical carbon material. This makes it easier for the electrically conductive supports 1 to support the electrically conductive particles 2, making it possible to achieve higher effects. In this case, the sheet-shaped carbon material may include a material such as graphene, the fibrous carbon material may include a material such as a carbon nanotube, and the spherical carbon material may include a material such as a carbon onion. This makes it further easier for the electrically conductive supports 1 to support the electrically conductive particles 2, making it possible to achieve further higher effects.

Further, the average particle size of the electrically conductive particles 2 may be greater than or equal to 1 nm and less than or equal to 25 nm. This sufficiently decreases the electrical resistance of the electrically conductive particles 2, making it possible to achieve higher effects.

### <1-4. Modifications>

The configuration of the electrically conductive substance 10 is appropriately modifiable.

For example, as illustrated in FIG. 2 corresponding to FIG. 1, the electrically conductive substance 10 may further include a covering layer 3. The covering layer 3 may cover part or all of the electrically conductive supports 1 supporting the electrically conductive particles 2 to thereby cover part or all of the electrically conductive substance 10. The covering layer 3 includes a material including carbon as a constituent element. Specifically, the covering layer 3 is formed as follows, for example. A mixture solution is prepared in which the electrically conductive substance 10 is added to an aqueous solution. The aqueous solution includes a carbon source such as sucrose. The mixture solution is sprayed and the sprayed mixture solution is dried by a method such as a spray dry method. Thereafter, the sprayed and dried mixture solution is heated. As a result, the covering layer 3 is formed. Note that FIG. 2 illustrates an example case where the covering layer 3 covers all of the electrically conductive supports 1.

In this case, compared with a case where the electrically conductive substance 10 includes no covering layer 3, the electrical resistance of the electrically conductive substance 10 is further decreased. Accordingly, the electrical conductivity of the electrically conductive substance 10 is further improved, making it possible to achieve higher effects.

### <2. Secondary Battery (Positive Electrode)>

Next, a description is given of a secondary battery according to an embodiment of the technology including the electrically conductive substance described above. Note that, because a positive electrode according to an embodiment of the technology is a part (a component) of the secondary battery described blow, the positive electrode is described together in the following.

The secondary battery described below includes a positive electrode and a negative electrode, as will be described later. The secondary battery obtains a battery capacity, more specifically, a capacity of the negative electrode, by utilizing a lithium insertion phenomenon and a lithium extraction phenomenon.

### <2-1. Cylindrical Type>

First, a cylindrical secondary battery is described as an example of the secondary battery.

To prevent unintentional precipitation of lithium metal on a surface of a negative electrode 22 in the middle of charging, a chargeable capacity of a negative electrode material is greater than a discharge capacity of a positive electrode 21. In other words, an electrochemical equivalent of the negative electrode material is greater than an electrochemical equivalent of the positive electrode 21.

### <2-1-1. Configuration>

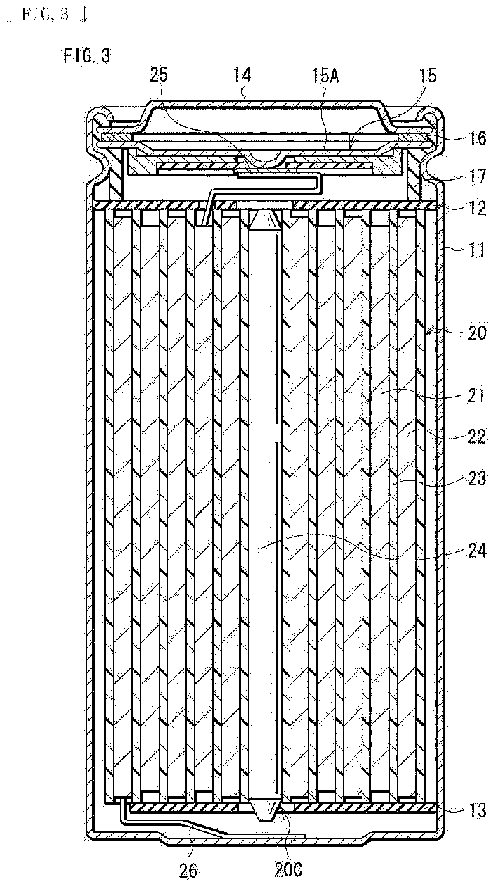

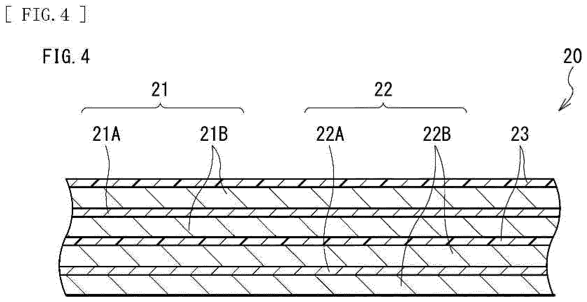

FIG. 3 illustrates a sectional configuration of the secondary battery. FIG. 4 illustrates an enlarged sectional configuration of a main part, i.e., a wound electrode body 20, of the secondary battery illustrated in FIG. 3. Note that FIG. 4 illustrates only part of the wound electrode body 20.

Referring to FIG. 3, the secondary battery is, for example, a cylindrical lithium-ion secondary battery provided with a cylindrical battery can 11 that contains a battery device (the wound electrode body 20).

Specifically, the secondary battery includes, for example, a pair of insulating plates 12 and 13 and the wound electrode body 20 that are provided in the battery can 11. The wound electrode body 20 includes, for example, a structure in which the positive electrode 21 and the negative electrode 22 are stacked with a separator 23 therebetween and in which the stack of the positive electrode 21, the negative electrode 22, and the separator 23 is wound. The wound electrode body 20 is impregnated with an electrolytic solution. The electrolytic solution is a liquid electrolyte.

The battery can 11 has, for example, a cylindrical hollow structure having a closed end and an open end. The battery can 11 includes, for example, a metal material such as iron. The battery can 11 has a surface that may be plated, for example, with a metal material such as nickel. The insulating plate 12 and the insulating plate 13 each extend, for example, in a direction intersecting a wound peripheral surface of the wound electrode body 20. The insulating plate 12 and the insulating plate 13 are disposed, for example, in such a manner as to interpose the wound electrode body 20 therebetween.

A battery cover 14, a safety valve mechanism 15, and a positive temperature coefficient device (PTC device) 16 are crimped at the open end of the battery can 11 by means of a gasket 17, for example, thereby sealing the open end of the battery can 11. The battery cover 14 includes, for example, a material similar to a material included in the battery can 11. The safety valve mechanism 15 and the positive temperature coefficient device 16 are each disposed on an inner side of the battery cover 14. The safety valve mechanism 15 is electrically coupled to the battery cover 14 via the positive temperature coefficient device 16. For example, when internal pressure of the battery can 11 reaches a certain level or higher as a result of causes including, without limitation, internal short circuit and heating from outside, a disk plate 15A inverts in the safety valve mechanism 15, thereby cutting off the electrical coupling between the battery cover 14 and the wound electrode body 20. The positive temperature coefficient device 16 involves an increase in electrical resistance in accordance with a rise in temperature, in order to prevent abnormal heat generation resulting from a large current. The gasket 17 includes an insulating material, for example. The gasket 17 has a surface on which a material such as asphalt may be applied, for example.

A center pin 24 is disposed in a space 20C provided at the winding center of the wound electrode body 20, for example. Note, however, that the center pin 24 may not be disposed in the space 20C, for example. A positive electrode lead 25 is coupled to the positive electrode 21. The positive electrode lead 25 includes, for example, an electrically conductive material such as aluminum. The positive electrode lead 25 is electrically coupled to the battery cover 14 via the safety valve mechanism 15, for example. A negative electrode lead 26 is coupled to the negative electrode 22. The negative electrode lead 26 includes, for example, an electrically conductive material such as nickel. The negative electrode lead 26 is electrically coupled to the battery can 11, for example.

### [Positive Electrode]

Referring to FIG. 2, the positive electrode 21 includes, for example, a positive electrode current collector 21A and a positive electrode active material layer 21B provided on the positive electrode current collector 21A. The positive electrode active material layer 21B may be provided on only one side of the positive electrode current collector 21A, or may be provided on each of both sides of the positive electrode current collector 21A, for example. FIG. 2 illustrates an example case where the positive electrode active material layer 21B is provided on each of both sides of the positive electrode current collector 21A.

The positive electrode current collector 21A includes, for example, an electrically conductive material such as aluminum. The positive electrode active material layer 21B includes one or more of the electrically conductive substances described above, as a positive electrode active material. That is, the electrically conductive substance is used as an active material into which lithium is to be inserted and from which lithium is to be extracted in this example. The positive electrode active material layer 21B may further include, for example, one or more of other materials including, without limitation, a positive electrode binder and a positive electrode conductor.

The positive electrode active material may further include one or more of positive electrode materials into which lithium is to be inserted and from which lithium is to be extracted, as long as the positive electrode active material includes the electrically conductive substance. The positive electrode material includes, for example, a lithium compound. The term "lithium compound" is a generic term for a compound that includes lithium as a constituent element. A reason for this is that a high energy density is obtainable. The lithium compound is not limited to a particular kind, and examples thereof include a lithium composite oxide and a lithium phosphate compound.

The term "lithium composite oxide" is a generic term for an oxide that includes lithium and one or more of other elements as constituent elements. The lithium composite oxide has, for example, any of crystal structures including, without limitation, a layered rock-salt crystal structure and a spinel crystal structure. The term "lithium phosphate compound" is a generic term for a phosphate compound that includes lithium and one or more of other elements as constituent elements. The lithium phosphate compound has, for example, a crystal structure such as an olivine crystal structure.

The "other elements" refer to elements other than lithium. In particular, it is preferable that the other elements belong to groups 2 to 15 in the long periodic table of elements, although the kinds of the other elements are not particularly limited. A reason for this is that a higher voltage is obtainable. Specific examples of the other elements include nickel, cobalt, manganese, and iron.

Examples of the lithium composite oxide having the layered rock-salt crystal structure include LiNiO₂, LiCoO₂, LiCo_{0.98}Al_{0.01}Mg_{0.01}O₂, LiNi_{0.5}Co_{0.2}Mn_{0.3}O₂, LiNi_{0.8}Co_{0.15}Al_{0.05}O₂, LiNi_{0.33}Co_{0.33}Mn_{0.33}O₂, Li_{1.2}Mn_{0.52}Co_{0.175}Ni_{0.1}O₂, and Li_{1.15}(Mn_{0.65}Ni_{0.22}Co_{0.13})O₂. Examples of the lithium composite oxide having the spinel crystal structure include LiMn₂O₄. Examples of the lithium phosphate compound having the olivine crystal structure include LiFePO₄, LiMnPO₄, LiMn_{0.5}Fe_{0.5}PO₄, LiMn_{0.7}Fe_{0.3}PO₄, and LiMn_{0.75}Fe_{0.25}PO₄.

The positive electrode binder includes, for example, materials including, without limitation, a synthetic rubber and a polymer compound. Examples of the synthetic rubber include a styrene-butadiene-based rubber. Examples of the polymer compound include polyvinylidene difluoride and polyimide.

The positive electrode conductor includes, for example, an electrically conductive material such as a carbon material. Examples of the carbon material include graphite, carbon black, acetylene black, and Ketjen black. The positive electrode conductor may include a material such as a metal material or an electrically conductive polymer.

### [Negative Electrode]

As illustrated in FIG. 2, the negative electrode 22 includes, for example, a negative electrode current collector 22A and a negative electrode active material layer 22B provided on the negative electrode current collector 22A. The negative electrode active material layer 22B may be provided on only one side of the negative electrode current collector 22A, or may be provided on each of both sides of the negative electrode current collector 22A, for example. FIG. 2 illustrates an example case where the negative electrode active material layer 22B is provided on each of both sides of the negative electrode current collector 22A.

The negative electrode current collector 22A includes, for example, an electrically conductive material such as copper. It is preferable that the negative electrode current collector 22A have a surface roughened by a method such as an electrolysis method. A reason for this is that adherence of the negative electrode active material layer 22B to the negative electrode current collector 22A is improved by utilizing a so-called anchor effect.

The negative electrode active material layer 22B includes one or more of negative electrode materials as a negative electrode active material. The negative electrode materials are materials into which lithium is insertable and from which lithium is extractable. The negative electrode active material layer 22B may further include, for example, another material such as a negative electrode binder or a negative electrode conductor.

Specifically, examples of the negative electrode material include a carbon material, a metal-based material, a titanium-containing compound, and a niobium-containing compound. Note that a material belonging to the titanium-containing compound or the niobium-containing compound is excluded from the metal-based material.

The term "carbon material" is a generic term for a material that includes carbon as a constituent element. A reason for this is that a high energy density is stably obtainable owing to the crystal structure of the carbon material which hardly varies upon insertion and extraction of lithium. Another reason for this is that an electrically conductive property of the negative electrode active material layer 22B improves owing to the carbon material which also serves as a negative electrode conductor.

Specifically, examples of the carbon material include graphitizable carbon, non-graphitizable carbon, and graphite. Note that spacing of a (002) plane of the non-graphitizable carbon is, for example, greater than or equal to 0.37 nm, and spacing of a (002) plane of the graphite is, for example, less than or equal to 0.34 nm.

More specific examples of the carbon material include pyrolytic carbons, cokes, glassy carbon fibers, an organic polymer compound fired body, activated carbon, and carbon blacks. Examples of the cokes include pitch coke, needle coke, and petroleum coke. The organic polymer compound fired body is a resultant of firing or carbonizing a polymer compound such as a phenol resin or a furan resin at any temperature. Other than the above, the carbon material may be low-crystalline carbon subjected to heat treatment at a temperature of about 1000°C or lower, or may be amorphous carbon, for example. The carbon material has a shape such as a fibrous shape, a spherical shape, a granular shape, or a scale-like shape.

The term "metal-based material" is a generic term for a material that includes one or more of metal elements and metalloid elements, as a constituent element or constituent elements. A reason for this is that a high energy density is obtainable.

The metal-based material may be a simple substance, an alloy, a compound, a mixture of two or more thereof, or a material including one or more phases thereof. Note that the "alloy" encompasses not only a material including two or more metal elements but also a material including one or more metal elements and one or more metalloid elements. The "alloy" may further include one or more non-metallic elements. The metal-based material has a state such as a solid solution, a eutectic (a eutectic mixture), an intermetallic compound, or a state including two or more thereof that coexist.

The metal element and the metalloid element are each able to form an alloy with lithium. Specific examples of the metal element and the metalloid element include magnesium, boron, aluminum, gallium, indium, silicon, germanium, tin, lead, bismuth, cadmium, silver, zinc, hafnium, zirconium, yttrium, palladium, and platinum.

Among the above-described materials, silicon or tin is preferable, and silicon is more preferable. A reason for this is that a markedly high energy density is obtainable owing to superior lithium insertability and superior lithium extractability thereof.

The metal-based material may specifically be a simple substance of silicon, a silicon alloy, a silicon compound, a simple substance of tin, a tin alloy, a tin compound, a mixture of two or more thereof, or a material including one or more phases thereof. The simple substance described here merely refers to a simple substance in a general sense. The simple substance may therefore include a small amount of impurity, that is, does not necessarily have a purity of 100%.

The silicon alloy includes, for example, one or more of elements including, without limitation, tin, nickel, copper, iron, cobalt, manganese, zinc, indium, silver, titanium, germanium, bismuth, antimony, and chromium as a constituent element or constituent elements other than silicon. The silicon compound includes, for example, one or more of elements including, without limitation, carbon and oxygen as a constituent element or constituent elements other than silicon. The silicon compound may include, as constituent elements other than silicon, any of the constituent elements described in relation to the silicon alloy.

Specifically, examples of the silicon alloy and the silicon compound include SiB₄, SiB₆, Mg₂Si, Ni2Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, and SiOᵥ (where 0 < v ≤ 2). Note, however, that a range of "v" may be 0.2 < v < 1.4, in one example.

The tin alloy includes, for example, one or more of elements including, without limitation, silicon, nickel, copper, iron, cobalt, manganese, zinc, indium, silver, titanium, germanium, bismuth, antimony, and chromium as a constituent element or constituent elements other than tin. The tin compound includes one or more of elements including, without limitation, carbon and oxygen as a constituent element or constituent elements other than tin. The tin compound may include, as a constituent element other than tin, any of the constituent elements described in relation to the tin alloy, for example.

Specifically, examples of the tin alloy and the tin compound include SnO_{w} (where 0 < w ≤ 2), SnSiO₃, and Mg₂Sn.

The term "titanium-containing compound" is a generic term for a material that includes titanium as a constituent element. A reason for this is that the titanium-containing compound is electrochemically stable as compared with a material such as a carbon material, and therefore electrochemically less reactive. Accordingly, a decomposition reaction of the electrolytic solution associated with the reactivity of the negative electrode 22 is suppressed. Specifically, examples of the titanium-containing compound include a titanium oxide, a lithium-titanium composite oxide, and a hydrogen-titanium compound.

Examples of the titanium oxide include a compound represented by Formula (21) below, i.e., bronze-type titanium oxide.

TiO_{w} ...... (21)

(Where w satisfies 1.85 ≤ w ≤ 2.15.)

Examples of the titanium oxide include titanium oxides (TiO₂) of an anatase type, a rutile type, and a brookite type. The titanium oxide may be a composite oxide that includes one or more of elements including, without limitation, phosphorus, vanadium, tin, copper, nickel, iron, and cobalt as a constituent element or constituent elements in addition to titanium. Examples of the composite oxide include TiO₂-P₂O₅, TiO₂-V₂O₅, TiO₂-P₂O₅-SnO₂, and TiO₂-P₂O₅-MeO. Me is, for example, one or more of elements including, without limitation, copper, nickel, iron, and cobalt. A potential that allows for insertion of lithium into the titanium oxide or extraction of lithium from the titanium oxide is, for example, 1 V to 2 V versus a lithium reference electrode.

The term "lithium-titanium composite oxide" is a generic term for a composite oxide that includes lithium and titanium as constituent elements. Specifically, examples of the lithium-titanium composite oxide include respective compounds represented by Formulae (22) to (24) below, i.e., ramsdellite-type lithium titanates. M22 in Formula (22) is a metal element that is to be a divalent ion. M23 in Formula (23) is a metal element that is to be a trivalent ion. M24 in Formula (24) is a metal element that is to be a tetravalent ion.

Li[LiₓM22_{(1-3x)/2}Ti_{(3+x)/2}]O₄ ...... (22)

(Where:
M22 is at least one of magnesium (Mg), calcium (Ca), copper (Cu), zinc (Zn), or strontium (Sr); and
x satisfies 0 ≤ x ≤ 1/3.)

Li[Li_{y}M23_{1-3y}Ti_{1+2y}]O₄ ...... (23)

(Where:
M23 is at least one of aluminum (Al), scandium (Sc), chromium (Cr), manganese (Mn), iron (Fe), germanium (Ga), or yttrium (Y); and
y satisfies 0 ≤ y ≤ 1/3.)

Li[Li_{1/3}M24_{z}Ti(_{5/3})-_{z}]O₄ ...... (24)

(Where:
M24 is at least one of vanadium (V), zirconium (Zr), or niobium (Nb); and
z satisfies 0 ≤ z ≤ 2/3.)

Although the lithium-titanium composite oxide is not limited to one having a particular crystal structure, it is preferable that the lithium-titanium composite oxide have a spinel crystal structure, in particular. A reason for this is that such a crystal structure is less changeable upon charging and discharging, allowing for a stable battery characteristic.

Specifically, examples of the lithium-titanium composite oxide represented by Formula (22) include Li_{3.75}Ti_{4.875}Mg_{0.375}O₁₂. Examples of the lithium-titanium composite oxide represented by Formula (23) include LiCrTiO₄. Examples of the lithium-titanium composite oxide represented by Formula (24) include Li4Ti₅O₁₂ and Li₄Ti_{4.95}Nb_{0.05}O₁₂.

The term "hydrogen-titanium compound" is a generic term for a composite oxide that includes hydrogen and titanium as constituent elements. Specifically, examples of the hydrogen-titanium compound include H₂Ti₃O₇(3TiO₂•1H₂O), H₆Ti₁₂O₂₇(3TiO_{2•}0.75H₂O), H₂Ti₆O₁₃(3TiO₂•0.5H₂O), H₂Ti₇O₁₅(3TiO₂•0.43H₂O), and H₂Ti₁₂O₂₅(3TiO₂•0.25H₂O).

The term "niobium-containing compound" is a generic term for a material that includes niobium as a constituent element. A reason for this is that the niobium-containing compound is electrochemically stable as with the titanium-containing compound described above, and therefore suppresses a decomposition reaction of the electrolytic solution associated with the reactivity of the negative electrode 22. Specifically, examples of the niobium-containing compound include a lithium-niobium composite oxide, a hydrogen-niobium compound, and a titanium-niobium composite oxide. Note that the material belonging to the niobium-containing compound is excluded from the titanium-containing compound.

The term "lithium-niobium composite oxide" is a generic term for a composite oxide that includes lithium and niobium as constituent elements. Examples of the lithium-niobium composite oxide include LiNbO₂. The term "hydrogen-niobium compound" is a generic term for a composite oxide that includes hydrogen and titanium as constituent elements. Examples of the hydrogen-niobium compound include H₄Nb₆O₁₇. The term "titanium-niobium composite oxide" is a generic term for a composite oxide that includes, for example, titanium and niobium as constituent elements. Examples of the titanium-niobium composite oxide include TiNb₂O₇ and Ti₂Nb₁₀O₂₉. The titanium-niobium composite oxide may intercalate, for example, lithium. An amount of intercalated lithium with respect to the titanium-niobium composite oxide is not particularly limited. For example, the amount of lithium to be intercalated into TiNb₂O₇ is up to four equivalents with respect to TiNb₂O₇.

Details of the negative electrode binder are similar to, for example, those of the positive electrode binder. Details of the negative electrode conductor are similar to, for example, those of the positive electrode conductor.

The negative electrode active material layer 22B is formed by a method such as a coating method, a vapor-phase method, a liquid-phase method, a thermal spraying method, or a firing (sintering) method, although a method of forming the negative electrode active material layer 22B is not particularly limited. For example, the coating method involves coating the negative electrode current collector 22A with a solution in which a mixture of materials including, without limitation, a particulate or powdered negative electrode active material and the negative electrode binder is dispersed or dissolved into a solvent such as an organic solvent. Examples of the vapor-phase method include a physical deposition method and a chemical deposition method. More specific examples of the vapor-phase method include a vacuum deposition method, a sputtering method, an ion plating method, a laser ablation method, a thermal chemical vapor deposition method, a chemical vapor deposition (CVD) method, and a plasma chemical vapor deposition method. Examples of the liquid-phase method include an electrolytic plating method and an electroless plating method. The thermal spraying method involves spraying a fused or semi-fused negative electrode active material onto the negative electrode current collector 22A. The firing method involves, for example, applying a solution onto the negative electrode current collector 22A by the coating method, followed by subjecting a film of the applied solution to heat treatment at a temperature higher than a melting point of a material such as the negative electrode binder. More specific examples of the firing method include an atmosphere firing method, a reactive firing method, and a hot-press firing method.

### [Separator]

The separator 23 includes, for example, a porous film including a material such as a synthetic resin or ceramic. The separator 23 may be a stacked film including two or more porous films that are stacked on each other, in one example. Examples of the synthetic resin include polyethylene.

In particular, the separator 23 may include, for example, the porous film and a polymer compound layer. The porous film serves as a base layer. The polymer compound layer is provided, for example, on one side or on each of both sides of the base layer. A reason for this is that distortion of the wound electrode body 20 is reduced owing to improved adherence of the separator 23 to the positive electrode 21 and improved adherence of the separator 23 to the negative electrode 22. This reduces a decomposition reaction of the electrolytic solution and also reduces leakage of the electrolytic solution with which the base layer is impregnated.

The polymer compound layer includes, for example, a polymer compound such as polyvinylidene difluoride. A reason for this is that such a polymer compound has superior physical strength and is electrochemically stable. For example, the polymer compound layer may include insulating particles such as inorganic particles. A reason for this is that safety improves. Examples of a material of the inorganic particles include aluminum oxide and aluminum nitride, and are not limited thereto.

### [Electrolytic Solution]

The wound electrode body 20 is impregnated with the electrolytic solution, as described above. Accordingly, the separator 23, the positive electrode 21, and the negative electrode 22 are each impregnated with the electrolytic solution, for example.

The electrolytic solution includes, for example, a solvent and an electrolyte salt. The electrolytic solution may include only one kind of solvent, or two or more kinds of solvents. Similarly, the electrolytic solution may include only one kind of electrolyte salt, or two or more kinds of electrolyte salts.

### (Solvent)

Examples of the solvent include a non-aqueous solvent (an organic solvent). The electrolytic solution including the non-aqueous solvent is a so-called non-aqueous electrolytic solution.

The non-aqueous solvent is not limited to a particular kind, and examples thereof include a cyclic carbonate ester, a chain carbonate ester, a lactone, a chain carboxylate ester, and a nitrile (mononitrile) compound. Examples of the cyclic carbonate ester include ethylene carbonate and propylene carbonate. Examples of the chain carbonate ester include dimethyl carbonate and diethyl carbonate. Examples of the lactone include γ-butyrolactone and γ-valerolactone. Examples of the chain carboxylate ester include methyl acetate, ethyl acetate, and methyl propionate. Examples of the nitrile compound include acetonitrile, methoxy acetonitrile, and 3-methoxy propionitrile.

Further examples of the non-aqueous solvent include an unsaturated cyclic carbonate ester, a halogenated carbonate ester, a sulfonate ester, an acid anhydride, a dicyano compound (a dinitrile compound), a diisocyanate compound, and a phosphate ester. Examples of the unsaturated cyclic carbonate ester include vinylene carbonate, vinyl ethylene carbonate, and methylene ethylene carbonate. Examples of the halogenated carbonate ester include 4-fluoro-1,3-dioxolane-2-one, 4,5-difluoro-1,3-dioxolane-2-one, and fluoromethyl methyl carbonate. Examples of the sulfonate ester include 1,3-propane sultone and 1,3-propene sultone. Examples of the acid anhydride include succinic anhydride, glutaric anhydride, maleic anhydride, ethane disulfonic anhydride, propane disulfonic anhydride, sulfobenzoic anhydride, sulfopropionic anhydride, and sulfobutyric anhydride. Examples of the dinitrile compound include succinonitrile, glutaronitrile, adiponitrile, and phthalonitrile. Examples of the diisocyanate compound include hexamethylene diisocyanate. Examples of the phosphate ester include trimethyl phosphate and triethyl phosphate.

### (Electrolyte Salt)

Examples of the electrolyte salt include a lithium salt. The lithium salt is not limited to a particular kind, and examples thereof include lithium hexafluorophosphate (LiPF₆), lithium tetrafluoroborate (LiBF₄), lithium bis(fluorosulfonyl)imide (LiN(SO₂F)₂), lithium bis(trifluoromethane sulfonyl)imide (LiN(CF₃SO₂)₂), lithium difluorophosphate (LiPF₂O₂), and lithium fluorophosphate (Li₂PFO₃). A content of the electrolyte salt is, for example, from 0.3 mol/kg to 3.0 mol/kg both inclusive with respect to the solvent, but is not particularly limited thereto.

### <2-1-2. Operation>

For example, upon charging the secondary battery, lithium ions are extracted from the positive electrode 21, and the extracted lithium ions are inserted into the negative electrode 22 via the electrolytic solution. For example, upon discharging the secondary battery, lithium ions are extracted from the negative electrode 22, and the extracted lithium ions are inserted into the positive electrode 21 via the electrolytic solution.

### <2-1-3. Manufacturing Method>

In a case of manufacturing the secondary battery, for example, the positive electrode 21 is fabricated, the negative electrode 22 is fabricated, the electrolytic solution is prepared, and the secondary battery is thereafter assembled by the following procedures.

### [Fabrication of Positive Electrode]

First, the positive electrode active material including the electrically conductive substance is mixed with materials including, without limitation, the positive electrode binder and the positive electrode conductor on an as-needed basis to thereby obtain a positive electrode mixture. Thereafter, the positive electrode mixture is dispersed or dissolved into a solvent such as an organic solvent to thereby prepare a paste positive electrode mixture slurry. Lastly, the positive electrode mixture slurry is applied on both sides of the positive electrode current collector 21A, following which the applied positive electrode mixture slurry is dried to thereby form the positive electrode active material layers 21B. Thereafter, the positive electrode active material layers 21B may be compression-molded by means of a machine such as a roll pressing machine. In this case, the positive electrode active material layers 21B may be heated. The positive electrode active material layers 21B may be compression-molded a plurality of times.

### [Fabrication of Negative Electrode]

The negative electrode active material layer 22B is formed on each of both sides of the negative electrode current collector 22A by a procedure similar to the fabrication procedure of the positive electrode 21 described above. Specifically, the negative electrode active material is mixed with materials including, without limitation, the negative positive electrode binder and the negative electrode conductor on an as-needed basis to thereby obtain a negative electrode mixture. Thereafter, the negative electrode mixture is dispersed or dissolved into a solvent such as an organic solvent to thereby prepare a paste negative electrode mixture slurry. Thereafter, the negative electrode mixture slurry is applied on each of both sides of the negative electrode current collector 22A, following which the applied negative electrode mixture slurry is dried to thereby form the negative electrode active material layers 22B. Thereafter, the negative electrode active material layers 22B may be compression-molded.

### [Preparation of Electrolytic Solution]

The electrolyte salt is added to a solvent, following which the solvent is stirred. As a result, the electrolyte salt is dissolved or dispersed into the solvent.

### [Assembly of Secondary Battery]

First, the positive electrode lead 25 is coupled to the positive electrode current collector 21A by a method such as a welding method, and the negative electrode lead 26 is coupled to the negative electrode current collector 22A by a method such as a welding method. Thereafter, the positive electrode 21 and the negative electrode 22 are stacked on each other with the separator 23 interposed therebetween, following which the stack of the positive electrode 21, the negative electrode 22, and the separator 23 is wound to thereby form a wound body. Thereafter, the center pin 24 is disposed in the space 20C provided at the winding center of the wound body.

Thereafter, the wound body is contained in the battery can 11 together with the pair of insulating plates 12 and 13 in a state where the wound body is interposed between the insulating plates 12 and 13. In this case, the positive electrode lead 25 is coupled to the safety valve mechanism 15 by a method such as a welding method, and the negative electrode lead 26 is coupled to the battery can 11 by a method such as a welding method. Thereafter, the electrolytic solution is injected into the battery can 11 to thereby impregnate the wound body with the electrolytic solution, causing each of the positive electrode 21, the negative electrode 22, and the separator 23 to be impregnated with the electrolytic solution. As a result, the wound electrode body 20 is formed.

Lastly, the open end of the battery can 11 is crimped by means of the gasket 17 to thereby attach the battery cover 14, the safety valve mechanism 15, and the positive temperature coefficient device 16 to the open end of the battery can 11. Thus, the wound electrode body 20 is sealed in the battery can 11. As a result, the secondary battery is completed.

### <2-1-4. Action and Effects>

According to the cylindrical secondary battery, the positive electrode 21 includes the electrically conductive substance described above as the positive electrode active material. Accordingly, for the reasons described in relation to the electrically conductive substance, electrical conductivity of the positive electrode active material is markedly improved, making it possible to obtain superior battery characteristics. Action and effects related to the cylindrical secondary battery other than the above are similar to those related to the electrically conductive substance. The action and the effects related to the cylindrical secondary battery described above are similarly obtainable by the positive electrode 21.

### <2-2. Laminated-film Type>

Next, a laminated secondary battery is described as another example of the secondary battery, and a positive electrode that is a part of the secondary battery is also described. In the following description, the components of the cylindrical secondary battery described already are referred to where appropriate with reference to FIGs. 3 and 4.

Regarding the laminated secondary battery, as with the cylindrical secondary battery described above, to prevent unintentional precipitation of lithium metal on a surface of a negative electrode 34 in the middle of charging, a chargeable capacity of a negative electrode material is greater than a discharge capacity of a positive electrode 33. In other words, an electrochemical equivalent of the negative electrode material is greater than an electrochemical equivalent of the positive electrode 33.

A related description is provided.

### <2-2-1. Configuration>

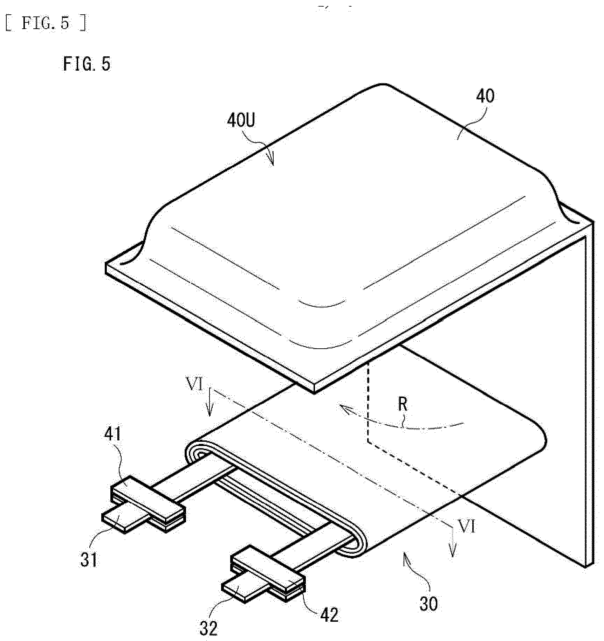

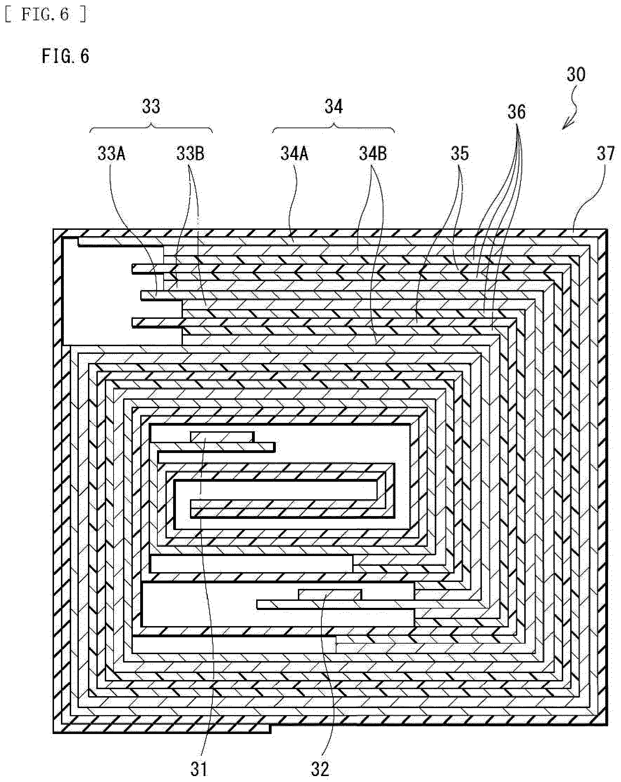

FIG. 5 is a perspective view of a configuration of another secondary battery. FIG. 6 illustrates, in an enlarged manner, a sectional configuration of a main part, i.e., a wound electrode body 30, of the secondary battery taken along a line VI-VI illustrated in FIG. 5. Note that FIG. 5 illustrates a state in which the wound electrode body 30 and an outer package member 40 are separated away from each other.

Referring to FIG. 5, the secondary battery is, for example, a laminated lithium-ion secondary battery that is provided with the film-shaped outer package member 40 that contains the battery device (the wound electrode body 30). The outer package member 40 has softness or flexibility.

The wound electrode body 30 is, for example, a structure in which the positive electrode 33 and the negative electrode 34 are stacked on each other with a separator 35 and an electrolyte layer 36 interposed therebetween and the stack of the positive electrode 33, the negative electrode 34, the separator 35, and the electrolyte layer 36 is wound. A surface of the wound electrode body 30 is protected, for example, by a protective tape 37. The electrolyte layer 36 is interposed between the positive electrode 33 and the separator 35, and is also interposed between the negative electrode 34 and the separator 35, for example.

A positive electrode lead 31 is coupled to the positive electrode 33. The positive electrode lead 31 is led out from inside to outside of the outer package member 40. The positive electrode lead 31 includes, for example, a material similar to the material included in the positive electrode lead 25. The positive electrode lead 31 has a shape such as a thin-plate shape or a meshed shape.

A negative electrode lead 32 is coupled to the negative electrode 34. The negative electrode lead 32 is led out from the inside to the outside of the outer package member 40. A direction in which the negative electrode lead 32 is led out is, for example, similar to a direction in which the positive electrode lead 31 is led out. The negative electrode lead 32 includes, for example, a material similar to the material included in the negative electrode lead 26. The negative electrode lead 32 has a shape, for example, similar to that of the positive electrode lead 31.

### [Outer Package Member]

The outer package member 40 is a single film that is foldable in a direction of an arrow R illustrated in FIG. 3, for example. The outer package member 40 has a portion having a depression 40U, for example. The depression 40U is adapted to contain the wound electrode body 30.

The outer package member 40 is, for example, a laminated body or a laminated film including a fusion-bonding layer, a metal layer, and a surface protective layer that are laminated in this order from the inside toward the outside. In a process of manufacturing the secondary battery, for example, the outer package member 40 is folded in such a manner that portions of the fusion-bonding layer oppose each other to interpose the wound electrode body 30 therebetween. Thereafter, outer edges of the fusion-bonding layer are fusion-bonded to each other. The fusion-bonding layer is, for example, a film that includes a polymer compound such as polypropylene. The metal layer is, for example, a metal foil that includes a metal material such as aluminum. The surface protective layer is, for example, a film that includes a polymer compound such as nylon. The outer package member 40 may include, for example, two laminated films. For example, the two laminated films may be adhered to each other by means of a material such as an adhesive.

For example, a sealing film 41 is interposed between the outer package member 40 and the positive electrode lead 31. The sealing film 41 is adapted to prevent entry of outside air. The sealing film 41 includes a material that is adherable to the positive electrode lead 31. Examples of such a material include a polyolefin resin such as polypropylene.

For example, a sealing film 42 is interposed between the outer package member 40 and the negative electrode lead 32. The sealing film 42 has a function similar to that of the sealing film 41. The sealing film 42 includes a material that is similar to the material included in the sealing film 41 except that the material is adherable to the negative electrode lead 32 instead of the positive electrode lead 31.

### [Positive Electrode, Negative Electrode, and Separator]

The positive electrode 33 includes, for example, a positive electrode current collector 33A and a positive electrode active material layer 33B. The negative electrode 34 includes, for example, a negative electrode current collector 34A and a negative electrode active material layer 34B. The positive electrode current collector 33A, the positive electrode active material layer 33B, the negative electrode current collector 34A, and the negative electrode active material layer 34B respectively have, for example, configurations similar to those of the positive electrode current collector 21A, the positive electrode active material layer 21B, the negative electrode current collector 22A, and the negative electrode active material layer 22B. That is, the positive electrode 33 includes, as the positive electrode active material, one or more of the electrically conductive substances described above. In this case, the one or more electrically conductive substances are used as an active material or active materials into which lithium is to be inserted and from which lithium is to be extracted. The separator 35 has, for example, a configuration similar to that of the separator 23.

### [Electrolyte Layer]

The electrolyte layer 36 includes an electrolytic solution and a polymer compound. The electrolyte layer 36 described here is a so-called gel electrolyte, in which the electrolytic solution is held by the polymer compound. A reason for this is that high ionic conductivity is obtainable and leakage of the electrolytic solution is prevented. The high ionic conductivity is 1 mS/cm or higher at room temperature, for example. The electrolyte layer 36 may further include, for example, any of other materials including, without limitation, various additives.

The electrolytic solution has a configuration similar to that of the electrolytic solution used in the cylindrical secondary battery. The polymer compound includes, for example, a homopolymer, a copolymer, or both. Examples of the homopolymer include polyvinylidene difluoride. Examples of the copolymer include a copolymer of vinylidene fluoride and hexafluoropylene.

Regarding the electrolyte layer 36 which is a gel electrolyte, a solvent included in the electrolytic solution is a broad concept that encompasses not only a liquid material but also an ion-conductive material that is able to dissociate the electrolyte salt. Accordingly, in a case of using an ion-conductive polymer compound, the polymer compound is also encompassed by the "solvent".

### <2-2-2. Operation>

For example, upon charging the secondary battery, lithium ions are extracted from the positive electrode 33, and the extracted lithium ions are inserted into the negative electrode 34 via the electrolyte layer 36. For example, upon discharging the secondary battery, lithium ions are extracted from the negative electrode 34, and the extracted lithium ions are inserted into the positive electrode 33 via the electrolyte layer 36.

### <2-2-3. Manufacturing Method>

The secondary battery including the electrolyte layer 36 is manufactured, for example, by any of the following three types of procedures.

### [First Procedure]

First, the positive electrode active material layer 33B is formed on each of both sides of the positive electrode current collector 33A to thereby fabricate the positive electrode 33 by a procedure similar to the procedure of fabricating the positive electrode 21. Further, the negative electrode active material layer 34B is formed on each of both sides of the negative electrode current collector 34A to thereby fabricate the negative electrode 34 by a procedure similar to the procedure of fabricating the negative electrode 22.

Thereafter, the electrolytic solution is prepared, following which the prepared electrolytic solution, the polymer compound, and a material such as an organic solvent are mixed to thereby prepare a precursor solution. Thereafter, the precursor solution is applied on the positive electrode 33, following which the applied precursor solution is dried to thereby form the electrolyte layer 36. Further, the precursor solution is applied on the negative electrode 34, following which the applied precursor solution is dried to thereby form the electrolyte layer 36. Thereafter, the positive electrode lead 31 is coupled to the positive electrode current collector 33A by a method such as a welding method, and the negative electrode lead 32 is coupled to the negative electrode current collector 34A by a method such as a welding method. Thereafter, the positive electrode 33 and the negative electrode 34 are stacked on each other with the separator 35 and the electrolyte layer 36 interposed therebetween, following which the stack of the positive electrode 33, the negative electrode 34, the separator 35, and the electrolyte layer 36 is wound to thereby form the wound electrode body 30. Thereafter, the protective tape 37 is attached to a surface of the wound electrode body 30.

Lastly, the outer package member 40 is folded in such a manner as to sandwich the wound electrode body 30, following which the outer edges of the outer package member 40 are bonded to each other by a method such as a thermal fusion bonding method. In this case, the sealing film 41 is interposed between the outer package member 40 and the positive electrode lead 31, and the sealing film 42 is interposed between the outer package member 40 and the negative electrode lead 32. Thus, the wound electrode body 30 is sealed in the outer package member 40. As a result, the secondary battery is completed.

### [Second Procedure]

First, the positive electrode 33 and the negative electrode 34 are fabricated. Thereafter, the positive electrode lead 31 is coupled to the positive electrode 33, and the negative electrode lead 32 is coupled to the negative electrode 34. Thereafter, the positive electrode 33 and the negative electrode 34 are stacked on each other with the separator 35 interposed therebetween, following which the stack of the positive electrode 33, the negative electrode 34, and the separator 35 is wound to thereby form a wound body. Thereafter, the protective tape 37 is attached to a surface of the wound body. Thereafter, the outer package member 40 is folded in such a manner as to sandwich the wound body, following which the outer edges excluding one side of the outer package member 40 are bonded to each other by a method such as a thermal fusion bonding method. Thus, the wound body is contained in the pouch-shaped outer package member 40.

Thereafter, the electrolytic solution, monomers, and a polymerization initiator are mixed. The monomers are raw materials of the polymer compound. Another material such as a polymerization inhibitor is mixed on an as-needed basis in addition to the electrolytic solution, the monomers, and the polymerization initiator. Thereafter, the mixture is stirred to thereby prepare a composition for electrolyte. Thereafter, the composition for electrolyte is injected into the pouch-shaped outer package member 40, following which the outer package member 40 is sealed by a method such as a thermal fusion bonding method. Lastly, the monomers are thermally polymerized to thereby form the polymer compound. This allows the electrolytic solution to be held by the polymer compound, thereby forming the electrolyte layer 36. Thus, the wound electrode body 30 is sealed in the outer package member 40. As a result, the secondary battery is completed.

### [Third Procedure]

First, a wound body is fabricated and the wound body is contained in the pouch-shaped outer package member 40 thereafter by a procedure similar to the second procedure, except for using the separator 35 that includes a polymer compound layer provided on each of both sides of a base layer. Thereafter, the electrolytic solution is injected into the outer package member 40, following which an opening of the outer package member 40 is sealed by a method such as a thermal fusion bonding method. Lastly, the outer package member 40 is heated with a weight being applied to the outer package member 40 to thereby cause the separator 35 to be closely attached to each of the positive electrode 33 and the negative electrode 34 with the polymer compound layer interposed therebetween. The polymer compound layer is thereby impregnated with the electrolytic solution to be gelated, forming the electrolyte layer 36. Thus, the wound electrode body 30 is sealed in the outer package member 40. As a result, the secondary battery is completed.

The third procedure helps to reduce swelling of the secondary battery, in contrast to the first procedure. The third procedure also helps to prevent the solvent and the monomers, which are the raw materials of the polymer compound, from remaining in the electrolyte layer 36, in contrast to the second procedure. Accordingly, the electrolyte layer 36 is attached sufficiently closely to each of the positive electrode 33, the negative electrode 34, and the separator 35.

### <2-2-4. Action and Effects>

According to the laminated secondary battery, the positive electrode 33 includes the electrically conductive substance as the positive electrode active material. Therefore, for the reasons described in relation to the electrically conductive substance, the electrical conductivity of the positive electrode active material is markedly improved, making it possible to obtain superior battery characteristics. Action and effects related to the laminated secondary battery other than the above are similar to those related to the electrically conductive substance. The action and the effects related to the laminated secondary battery described above are similarly obtainable by the positive electrode 33.

### <2-3. Modifications>

The configuration of the secondary battery is appropriately modifiable.

Specifically, the cylindrical secondary battery and the laminated secondary battery each use the electrically conductive substance as the active material (the positive electrode active material). However, the electrically conductive substance may be used, for example, as both the active material (the positive electrode active material) and the conductor (the positive electrode conductor). Moreover, in another example, a positive electrode active material (a positive electrode material) into which lithium is to be inserted and from which lithium is to be extracted may be used separately from the electrically conductive substance as described above, to thereby use the electrically conductive substance as the conductor (the positive electrode conductor). In particular, the use of the electrically conductive material (the positive electrode conductor) together with the positive electrode active material improves the electrically conductive property, making it possible to achieve higher effects.

Further, in another example, the laminated secondary battery may include the electrolytic solution instead of the electrolyte layer 36. In this case, the wound electrode body 30 is impregnated with the electrolytic solution. Therefore, the positive electrode 33, the negative electrode 34, and the separator 35 are each impregnated with the electrolytic solution. Further, the wound body is contained in the pouch-shaped outer package member 40, following which the electrolytic solution is injected into the pouch-shaped outer package member 40 to thereby cause the wound body to be impregnated with the electrolytic solution. As a result, the wound electrode body 30 is formed. Similar effects are achievable also in this case.

### <3. Applications of Secondary Battery>

Applications of the secondary battery are, for example, as follows.

The applications of the secondary battery are not particularly limited as long as they are, for example, machines, apparatuses, instruments, devices, or systems (assemblies of a plurality of apparatuses, for example) in which the secondary battery is usable as a driving power source, an electric power storage source for electric power accumulation, or any other source. The secondary battery used as a power source may serve as a main power source or an auxiliary power source. The main power source is preferentially used regardless of the presence of any other power source. The auxiliary power source may be, for example, used in place of the main power source, or may be switched from the main power source on an as-needed basis. In a case where the secondary battery is used as the auxiliary power source, the kind of the main power source is not limited to the secondary battery.

Examples of the applications of the secondary battery include: electronic apparatuses including portable electronic apparatuses; portable life appliances; storage devices; electric power tools; battery packs mountable on laptop personal computers or other apparatuses as detachable power sources; medical electronic apparatuses; electric vehicles; and electric power storage systems. Examples of the electronic apparatuses include video cameras, digital still cameras, mobile phones, laptop personal computers, cordless phones, headphone stereos, portable radios, portable televisions, and portable information terminals. Examples of the portable life appliances include electric shavers. Examples of the storage devices include backup power sources and memory cards. Examples of the electric power tools include electric drills and electric saws. Examples of the medical electronic apparatuses include pacemakers and hearing aids. Examples of the electric vehicles include electric automobiles including hybrid automobiles. Examples of the electric power storage systems include home battery systems for accumulation of electric power for emergency. Needless to say, the secondary battery may have applications other than those described above.

### [Examples]

Examples of the technology are described below. The description is given in the following order.
1. Manufacturing and Evaluation of Electrically Conductive Substance
   1-1. Manufacturing of Electrically Conductive Substance
   1-2. Evaluation of Electrically Conductive Substance
2. Manufacturing and Evaluation of Secondary Battery (Electrically Conductive Substance = Positive Electrode Active Material)
   2-1. Manufacturing of Secondary Battery
   2-2. Evaluation of Secondary Battery
3. Manufacturing and Evaluation of Secondary Battery (Electrically Conductive Substance = Positive Electrode Conductor)
   3-1. Manufacturing of Secondary Battery
   3-2. Evaluation of Secondary Battery
4. Conclusion

### <1. Manufacturing and Evaluation of Electrically Conductive Substance>

As described below, the electrically conductive substances 10 were manufactured by a hydrothermal synthesis method, and physical characteristics of the manufactured electrically conductive substances 10 were evaluated.

### <1-1. Manufacturing of Electrically Conductive Substance>

First, electrically conductive supports 1 (the sheet-shaped carbon material and the fibrous carbon material) were prepared. As the sheet-shaped carbon material, a single-layer or bi-layer graphene nanosheet (having a thickness of 0.5 mm and a purity of 99.8%) exfoliated from a thin piece of natural graphite by an electrochemical exfoliation method was used. As the fibrous carbon material, a suspension in which carbon nanotubes (CNTs) were dispersed in an organic solvent (N-methyl-2-pyrrolidone) was used.

Thereafter, a lithium-containing compound (lithium hydroxide (LiOH)), a manganese-containing compound (manganese sulfate (MnSO₄)), an iron-containing compound (iron sulfate (FeSO₄)), a magnesium-containing compound (magnesium sulfate (MgSO₄)), a phosphate compound (phosphoric acid (H₃PO₄)), and an antioxidant (ascorbic acid, which was an antioxidant for iron) were prepared.

Thereafter, the electrically conductive supports 1 were added to an aqueous solvent (pure water), following which the aqueous solvent was stirred (for 30 minutes) to thereby prepare a first suspension (having a concentration of 1.5 wt%). Thereafter, the lithium-containing compound (0.48 mol) was added to the first suspension, and the first suspension was thereby stirred (for 10 minutes). Thereafter, the phosphate compound (0.16 mol) was added to the first suspension, and the first suspension was thereby stirred (at a temperature of 30°C for 3 hours). As a result, a first mixture solution was prepared. Thereafter, the first mixture solution was heated (at a temperature of 60°C for 24 hours) in a vacuum atmosphere. As a result, the electrically conductive supports 1 supporting lithium phosphate particles were obtained.

Thereafter, the electrically conductive supports 1 supporting the lithium phosphate particles and an antioxidant (0.032 mol of ascorbic acid) were added to an aqueous solvent (pure water), following which the aqueous solvent was stirred (for 5 minutes) to thereby prepare a second suspension. Thereafter, the manganese-containing compound (0.16 mol), the iron-containing compound (0.16 mol), and the magnesium-containing compound (0.16 mol) were added to the second suspension, following which the second suspension was stirred (for 5 minutes to 10 minutes) to thereby prepare a second mixture solution. Thereafter, the second mixture solution was heated in an autoclave (at a temperature of 190°C for 12 hours) while being stirred (at a speed of 400 rpm) to thereby cause transmetalation to proceed, following which the reactant was dried at room temperature. Thereafter, the reactant was washed using a washing solvent (pure water and acetone), following which the washed reactant was dried (for 24 hours) in a vacuum atmosphere. Thereafter, the reactant was subjected to a pulverization process with use of a ball mill.

Lastly, a solution in which the electrically conductive substances 10 were dispersed in an aqueous sucrose solution was prepared, and the solution was sprayed and dried (at a temperature of 80°C for 12 hours) by means of a spray dryer in a vacuum atmosphere. Thereafter, the sprayed and dried material was heated (at a temperature of 700°C for 3 hours) in a nitrogen atmosphere by means of an electric furnace to thereby form the covering layer 3 (carbon). Thus, the electrically conductive particles 2 (LiMn_{0.75}Fe_{0.20}Mg_{0.05}PO₄ which is a lithium phosphate compound) were supported by the electrically conductive supports 1. As a result, the electrically conductive substance 10 was obtained.

### <1-2. Evaluation of Electrically Conductive Substance>

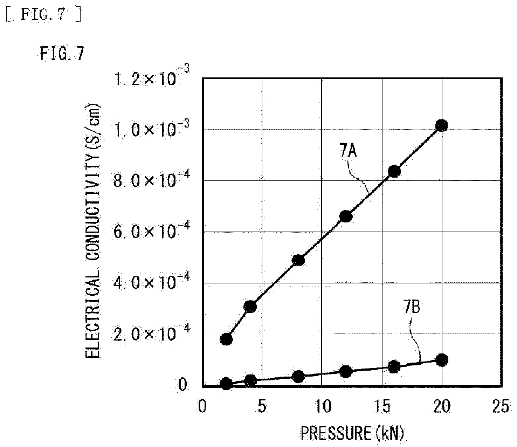

Examination of an electrical conductivity characteristic of the electrically conductive substances 10 revealed the result (7A) illustrated in FIG. 7. For a comparison purpose, the electrical conductivity of usual lithium phosphate compound particles (LiMn_{0.75}Fe_{0.20}Mg_{0.05}PO₄ having an average particle size of 43 nm) not supported by the electrically conductive supports 1 was also examined, which revealed the result (7B) illustrated in FIG. 7.

In a case of examining the electrical conductivity characteristic of the electrically conductive substance 10, the thickness (cm) and the electrical resistance (Q) of the electrically conductive substance 10 were measured while applying pressure (kN) to the electrically conductive substance 10 (having a weight of 1 g and a thickness of 10 mm) shaped into a pellet shape. Thereafter, electrical conductivity (S/cm) was calculated on the basis of the measured thickness and the measured electrical resistance, and the calculated electrical conductivity was plotted against pressure, as illustrated in FIG. 7. In this case, a powder resistance measuring system MCP-PD51 (having a four-point probe, a voltage limit of 10 V, an inter-electrode distance of 3 mm, and an electrode diameter of 0.7 mm) available from Mitsubishi Chemical Analytech, Co., Ltd. was used as a measurement apparatus. The electrical conductivity characteristic of the lithium phosphate compound particles was also examined by a similar procedure.

As illustrated in FIG. 7, in a case (7B) of using the usual lithium phosphate compound particles not supported by the electrically conductive supports 1, an increase in pressure hardly increased the electrical conductivity. In contrast, in a case (7A) of using the electrically conductive substance 10, an increase in pressure markedly increased the electrical conductivity in accordance with the increase in pressure.

### <2. Manufacturing and Evaluation of Secondary Battery (Electrically Conductive Material = Positive Electrode Active Material)>

As described below, the electrically conductive substances 10 were used as the positive electrode active materials to fabricate the laminated secondary batteries each corresponding to the laminated secondary battery illustrated in FIGs. 3 and 4, and the battery characteristics of the secondary batteries were evaluated.

### <2-1. Manufacturing of Secondary Battery>

In a case of fabricating the positive electrode 33, first, 95.0 parts by mass of the positive electrode active material and 5.0 parts by mass of the positive electrode binder (polyvinylidene difluoride) were mixed to thereby obtain a positive electrode mixture. As the positive electrode active material, two kinds of electrically conductive substances 10 with no covering layer 3 (Experiment examples 1 and 3), two kinds of electrically conductive substances 10 with the covering layer 3 (Experiment examples 2 and 4), and usual lithium phosphate compound particles (Experiment example 5) were used, as described in Table 1. The average particle size (nm) of the electrically conductive particles 2 and the average particle size (nm) of the usual lithium phosphate compound particles were as described in Table 1.

Thereafter, the positive electrode mixture was put into an organic solvent (N-methyl-2-pyrrolidone), following which the organic solvent was stirred to thereby prepare a paste positive electrode mixture slurry. Thereafter, the positive electrode mixture slurry was applied on each of both sides of the positive electrode current collector 33A (a band-shaped aluminum foil having a thickness of 12 µm) by means of a coating apparatus, following which the applied positive electrode mixture slurry was dried to thereby form the positive electrode active material layers 33B. Lastly, the positive electrode active material layers 33B were compression-molded by means of a roll pressing machine.

In a case of fabricating the negative electrode 34, first, 90.5 parts by mass of the negative electrode active material (Li₄Ti₅O₁₂, which is a lithium-titanium composite oxide), 5.0 parts by mass of the negative electrode binder (polyvinylidene difluoride), and 4.5 parts by mass of the negative electrode conductor (graphite) were mixed to thereby obtain a negative electrode mixture. Thereafter, the negative electrode mixture was put into an organic solvent (N-methyl-2-pyrrolidone), following which the organic solvent was stirred to thereby prepare a paste negative electrode mixture slurry. Thereafter, the negative electrode mixture slurry was applied on each of both sides of the negative electrode current collector 34A (a band-shaped copper foil having a thickness of 15 µm) by means of a coating apparatus, following which the applied negative electrode mixture slurry was dried to thereby form the negative electrode active material layers 34B. Lastly, the negative electrode active material layers 34B were compression-molded by means of a roll pressing machine.

In a case of preparing the electrolytic solution, an electrolyte salt (lithium hexafluorophosphate) was added to a solvent (propylene carbonate and dimethyl carbonate), following which the solvent was stirred. In this case, a mixture ratio (a volume ratio) of propylene carbonate/dimethyl carbonate in the solvent was set to 40:60, and the content of the electrolyte salt with respect to the solvent was set to 1 mol/l (= 1 mol/dm³).

In a case of assembling the secondary battery, first, the aluminum positive electrode lead 31 was welded to the positive electrode current collector 33A, and the copper negative electrode lead 32 was welded to the negative electrode current collector 34A. Thereafter, the positive electrode 33 and the negative electrode 34 were stacked on each other with the separator 35 (a fine-porous polyethylene film having a thickness of 15 µm) interposed therebetween to thereby obtain a stacked body. Thereafter, the stacked body was wound in a longitudinal direction, following which the protective tape 37 was attached to the stacked body to thereby form a wound body.

Thereafter, the outer package member 40 was folded in such a manner as to sandwich the wound body, following which the outer edges of two sides of the outer package member 40 were thermal fusion bonded to each other. As the outer package member 40, a laminated aluminum film was used in which a surface protective layer (a nylon film having a thickness of 25 µm), a metal layer (an aluminum foil having a thickness of 40 µm), and a fusion-bonding layer (a polypropylene film having a thickness of 30 µm) were stacked in this order. In this case, the sealing film 41 (a polypropylene film) was interposed between the positive electrode lead 31 and the outer package member 40, and the sealing film 42 (a polypropylene film) was interposed between the negative electrode lead 32 and the outer package member 40.

Lastly, the electrolytic solution was injected into the outer package member 40 to thereby impregnate the wound body with the electrolytic solution. Thereafter, the outer edges of one of the remaining sides of the outer package member 40 were thermal fusion bonded to each other in a reduced-pressure environment. Thus, the wound electrode body 30 was formed being sealed in the outer package member 40. As a result, the laminated secondary battery was completed.

### <2-2. Evaluation of Secondary Battery>

Evaluation of battery characteristics of the secondary batteries revealed the results described in Table 1. A discharge characteristic, a charge characteristic, and an electrical resistance characteristic were evaluated here as the battery characteristics.

In a case of examining the discharge characteristic, first, the secondary battery was charged and discharged for one cycle in an ambient temperature environment (at a temperature of 23°C) in order to stabilize a state of the secondary battery. Thereafter, the secondary battery was charged and discharged for another cycle in the same environment, following which a second-cycle discharge capacity was measured. Thereafter, the secondary battery was further charged and discharged for 100 cycles in the same environment, following which a 102nd-cycle discharge capacity was measured. Lastly, a discharge capacity retention rate (%) = (102nd-cycle discharge capacity / second-cycle discharge capacity) × 100 was calculated.

Upon the charging, the secondary battery was charged with a constant current of 1 C until a voltage reached 3.0 V, and was thereafter charged with a constant voltage of 3.0 V until a current reached 0.05 C. Upon the discharging, the secondary battery was discharged with a constant current of 1 C until the voltage reached 0.5 V. "1 C" refers to a value of a current that causes a battery capacity (a theoretical capacity) to be completely discharged in 1 hour. "0.05 C" refers to a value of a current that causes the battery capacity to be completely discharged in 20 hours.

In a case of examining the charge characteristic, first, the state of the secondary battery was stabilized by the procedure described above. Thereafter, the secondary battery was charged and discharged for one cycle to thereby measure a first-cycle charge capacity. Thereafter, the secondary battery was further charged and discharged for three cycles to thereby measure a fourth-cycle charge capacity. Lastly, a charge capacity retention rate (%) = (fourth-cycle charge capacity / first-cycle charge capacity) × 100 was calculated.

Upon the charging and the discharging for the first cycle, the secondary battery was charged with a constant current of 0.2 C until a voltage reached 3.0 V, was thereafter charged with a constant voltage of 3.0 V until a current reached 0.01 mA, and was discharged with a constant current of 1 C until the voltage reached 0.5 V. Conditions of the charging and the discharging for the second cycle were similar to those for the first cycle except that the current for the discharging was changed to 2 C. Conditions of the charging and the discharging for the third cycle were similar to those for the first cycle except that the current for the discharging was changed to 4 C. Conditions of the charging and the discharging for the fourth cycle were similar to those for the first cycle except that the current for the discharging was changed to 10 C. "0.2 C", "2 C", "4 C", and "10 C" refer to values of currents that cause a battery capacity (a theoretical capacity) to be completely discharged in 5 hours, 0.5 hours, 0.25 hours, and 0.1 hours, respectively.

In a case of examining the electrical resistance characteristic, first, the state of the secondary battery was stabilized by the procedure described above. Thereafter, the secondary battery was charged and discharged for three cycles in an ambient temperature environment (at a temperature of 25°C) to thereby measure a third-cycle discharge capacity. Upon the charging and the discharging for each of the first and the second cycles, the secondary battery was charged with a constant current of 0.1 C until a voltage reached 3.0 V, was thereafter charged with a constant voltage of 3.0 V until a current reached 0.01 mA, and was discharged with a constant current of 0.1 C until the voltage reached 0.5 V. Upon the charging and the discharging for the third cycle, the secondary battery was charged with a constant current of 0.2 C until a voltage reached 3.0 V, was thereafter charged with a constant voltage of 3.0 V until a current reached 0.01 mA, and was discharged with a constant current of 0.2 C until the voltage reached 0.5 V. "0.1 C" refers to a value of a current that causes a battery capacity (a theoretical capacity) to be completely discharged in 10 hours.

Lastly, the secondary battery was charged in the same environment until a state of charge (SOC) reached 50% with respect to the third-cycle discharge capacity as a reference, following which an impedance (Q) of the secondary battery was measured by means of an electrochemical measurement apparatus (a multi-channel electrochemical measurement system VPM3 available from BioLogic Sciences Instruments). The impedance was measured under conditions of: a frequency range from 1 MHz to 10mHz both inclusive; and an alternating-current amplitude (AC Amplitude) of 10 mV. The impedance at a frequency of 10 Hz was thereby measured.

### [Table 1]

**Table 1 (Electrically conductive substance = Positive electrode active material)**

| Experiment example | Electrically conductive substance | | | | Lithium phosphate compound particle | | Discharge capacity retention rate (%) | Charge capacity retention rate (%) | Impedance (Ω) |
|---|---|---|---|---|---|---|---|---|---|
| | Electrically conductive support | Electrically conductive particle | | Covering layer | Kind | Average particle size (nm) | | | |
| | | Kind | Average particle size (nm) | Kind | | | | | |
| 1 | Graphene | LMFMP | 32 | - | - | - | 86 | 53 | 86 |
| 2 | Graphene | LMFMP | 26 | C | - | - | 94 | 58 | 74 |
| 3 | CNT | LMFMP | 16 | - | - | - | 83 | 47 | 98 |
| 4 | CNT | LMFMP | 21 | C | - | - | 90 | 48 | 81 |
| 5 | - | - | - | - | LMFMP | 43 | 80 | 38 | 142 |

| | | | | | | | | | |
|---|---|---|---|---|---|---|---|---|---|
| LMFMP = LiMn_{0.75}Fe_{0.20}Mg_{0.05}PO₄ | | | | | | | | | |

As described in Table 1, the electrically conductive substance 10 including the electrically conductive particles 2 formed by a hydrothermal synthesis method (Experiment examples 1 to 4) had an average particle size of less than 35 nm, and the lithium phosphate compound particles (Experiment example 5) had an average particle size of not less than 35 nm.

Further, in the case where the electrically conductive substance 10 was used (Experiment examples 1 to 4), the discharge capacity retention rate and the charge capacity retention rate both increased and the electrical resistance decreased, compared with the case where the usual lithium phosphate compound particles were used (Experiment example 5). In the case where the electrically conductive substance 10 was used (Experiment examples 1 to 4), if the covering layer 3 was formed (Experiment examples 2 and 4) in particular, the discharge capacity retention rate and the charge capacity retention rate both further increased and the electrical resistance further decreased, compared with a case where the covering layer 3 was not formed (Experiment examples 1 and 3).

### <3. Manufacturing and Evaluation of Secondary Battery (Electrically Conductive Substance = Positive Electrode Conductor)>

As described below, the electrically conductive substances 10 were used as the positive electrode conductors to fabricate the laminated secondary batteries each corresponding to the laminated secondary battery illustrated in FIGs. 3 and 4, and battery characteristics of the secondary batteries were evaluated.

### <3-1. Manufacturing of Secondary Battery>

As described below, the laminated secondary battery was fabricated by similar procedures except that the procedure of preparing the positive electrode mixture was changed. A mixture ratio between the positive electrode active material and the positive electrode conductor was as described in FIG. 2.

In a case of preparing the positive electrode mixture, parts by mass of the positive electrode active material (LiMn_{0.75}Fe_{0.20}Mg_{0.05}PO₄, which was the usual lithium phosphate compound particles having an average particle size of 43 nm), parts by mass of the positive electrode binder (polyvinylidene difluoride), and the positive electrode conductor (the electrically conductive substance 10 in Experiment example 1 described above) were mixed.

Further, in the case of preparing the positive electrode mixture, a similar procedure was followed except for further using an additional positive electrode conductor (graphite).

For a comparison purpose, in the case of preparing the positive electrode mixture, the positive electrode active material (LiMn_{0.75}Fe_{0.20}Mg_{0.05}PO₄, which is the usual lithium phosphate compound particles having an average particle size of 43 nm), the positive electrode binder (polyvinylidene difluoride), and the positive electrode conductor (graphite) were mixed.

### <3-2. Evaluation of Secondary Battery>

Evaluation of battery characteristics of the secondary batteries revealed the results described in Table 2. A discharge characteristic, a charge characteristic, and an electrical resistance characteristic were evaluated here as the battery characteristics by the procedures described above.

### [Table 2]

**Table 2 (Electrically conductive substance = Positive electrode conductor)**

| Experiment example | Positive electrode active material | | Positive electrode conductor | | | | Discharge capacity retention rate (%) | Charge capacity retention rate (%) | Impedance (Ω) |
|---|---|---|---|---|---|---|---|---|---|
| | Kind | Content (Parts by mass) | Kind | Content (Parts by mass) | Kind | Content (Parts by mass) | | | |
| 6 | LMFMP | 91.0 | Electrically conductive substance | 4.5 | Graphite | 4.5 | 87 | 52 | 204 |
| 7 | LMFMP | 95.5 | Electrically conductive substance | 4.5 | - | - | 80 | 40 | 381 |
| 8 | LMFMP | 95.5 | - | - | Graphite | 4.5 | 78 | 39 | 398 |

| | | | | | | | | | |
|---|---|---|---|---|---|---|---|---|---|
| LMFMP = LiMn_{0.75}Fe_{0.20}Mg_{0.05}PO₄ | | | | | | | | | |

As described in Table 2, in a case where the electrically conductive substance 10 was used as the positive electrode conductor (Experiment examples 6 and 7), the discharge capacity retention rate and the charge capacity retention rate both increased and the electrical resistance decreased, compared with a case where the carbon material (graphite) was used as the positive electrode conductor (Experiment example 8). In the case where the electrically conductive substance 10 was used (Experiment examples 6 and 7), if the additional positive electrode conductor (graphite) was also used (Experiment example 6) in particular, the discharge capacity retention rate and the charge capacity retention rate both further increased and the electrical resistance further decreased, compared with a case where the additional positive electrode conductor was not used (Experiment example 7).

### <4. Conclusion>

Based upon the above, in a case where: the electrically conductive substance 10 included the electrically conductive particles 2 that were primary particles supported by the electrically conductive supports 1 including the carbon material; the electrically conductive particles 2 each included the lithium phosphate compound; and the electrically conductive particles 2 had an average particle size of less than 35 nm, the electrical conductivity was markedly improved.

Accordingly, the discharge characteristic, the charge characteristic, and the electrical resistance characteristic were all improved regarding the secondary battery that used the electrically conductive substance 10 as the active material or the conductor. As a result, superior battery characteristics were obtained.

Although the technology has been described above with reference to some embodiments and Examples, embodiments of the technology are not limited to those described with reference to the embodiments and the Examples above, and are therefore modifiable in a variety of ways.

Specifically, although the description has been given of the cylindrical secondary battery and the laminated secondary battery, this is non-limiting. For example, the secondary battery may be of any other type such as a prismatic type or a coin type.

Moreover, although the description has been given of a case of the battery device having a wound structure, this is non-limiting. For example, the battery device may have any other structure such as a stacked structure.

Note that the effects described herein are mere examples, and effects of the technology are therefore not limited to those described herein. Accordingly, the technology may achieve any other effect.

Moreover, it should be understood that those skilled in the art would make various modifications, combinations, sub-combinations, and alterations depending on design requirements and other factors, and they are within the scope of the attached claims or the equivalents thereof.

## Claims

1. An electrically conductive substance comprising:
electrically conductive supports each including a carbon material; and
electrically conductive particles supported by the electrically conductive supports, the electrically conductive particles being primary particles that each include a lithium phosphate compound represented by Formula (1) below and have an average particle size of less than 35 nanometers,
LiₓMn_{y}Fe_{z}M1_{1-y-z}PO₄ ...... (1)
where
M1 is at least one of magnesium (Mg), cobalt (Co), calcium (Ca), nickel (Ni), aluminum (Al), molybdenum (Mo), zirconium (Zr), zinc (Zn), chromium (Cr), tin (Sn), strontium (Sr), titanium (Ti), copper (Cu), boron (B), vanadium (V), or tungsten (W), and
x, y, and z satisfy 0 < x ≤ 1.2, 0 ≤ y ≤ 1, 0 ≤ z ≤ 1, and 0 < (y + z).

2. The electrically conductive substance according to claim 1, wherein
the electrically conductive supports supporting the electrically conductive particles form secondary particles, and
the secondary particles have an average particle size that is greater than or equal to 50 nanometers and less than or equal to 1000 nanometers.

3. The electrically conductive substance according to claim 1 or 2, wherein the carbon material includes at least one of a sheet-shaped carbon material, a fibrous carbon material, or a spherical carbon material.

4. The electrically conductive substance according to claim 3, wherein
the sheet-shaped carbon material includes graphene, reduced graphene oxide, or both,
the fibrous carbon material includes at least one of a carbon nanotube, a carbon nanofiber, or a carbon nanobud, and
the spherical carbon material includes at least one of a carbon onion, carbon nanofoam, carbide-derived carbon, or acetylene black.

5. The electrically conductive substance according to any one of claims 1 to 4, wherein the average particle size of the electrically conductive particles is greater than or equal to 1 nanometer and less than or equal to 25 nanometers.

6. The electrically conductive substance according to any one of claims 1 to 5, further comprising a covering layer that includes carbon as a constituent element and covers part or all of the electrically conductive supports supporting the electrically conductive particles.

7. A positive electrode comprising:
a positive electrode current collector; and
a positive electrode active material layer that is provided on the positive electrode current collector and includes the electrically conductive substance according to any one of claims 1 to 6.

8. The positive electrode according to claim 7, wherein the positive electrode active material layer further includes a positive electrode active material into which lithium is insertable and from which lithium is extractable.

9. A secondary battery comprising:
the positive electrode according to claim 7 or 8;
a negative electrode; and
an electrolytic solution.
